# EUROPÄISCHE PATENTSCHRIFT

(11) **EP 0 591 574 B1**
(45) Veröffentlichungstag und Bekanntmachung des Hinweises auf die Patenterteilung: **25.02.1998**
(21) Anmeldenummer: 92119807.3
(22) Anmeldetag: 20.11.1992
(51) Int. Cl.: B25B 21/00, B23P 19/06, F16D 13/18

(54) **Kraftangetriebenes Elektrohandwerkzeug**
Power driven electric handtool
Outil à main électrique motorisé

(30) Priorität: 07.10.1992 DE 4233712
(43) Veröffentlichungstag der Anmeldung: 13.04.1994
(73) Patentinhaber: CEKA ELEKTROWERKZEUGE AG + Co.KG, CH-9630 Wattwil (CH)
(72) Erfinder: Heule, Markus, CH-9443 Widnau (CH); Gerschwiler, Othmar, CH-9630 Wattwil (CH)
(74) Vertreter: Otte, Peter, Dipl.-Ing.

(56) Entgegenhaltungen:
- DE-C- 72 507
- FR-A- 443 758
- FR-A- 1 500 685
- FR-A- 2 415 521
- GB-A- 1 069 852
- GB-A- 2 146 562
- US-A- 2 113 512

## Beschreibung

### Stand der Technik

Die Erfindung geht aus von einem kraftangetriebenen Elektrohandwerkzeug nach dem Oberbegriff des Anspruchs 1. Ein solches Elektrohandwerkzeug ist z.B. aus der GB-A-1 069 852 bekannt.

Elektrohandwerkzeuge, die zwischen dem antreibenden Elektromotor und der Ausgangswelle des Werkzeugs eine Kupplung aufweisen, sind in vielfältiger Form bekannt, und zwar hauptsächlich bei sogenannten Schraubern, also Schraubwerkzeugen, die durch mindestens eine solche Kupplung in die Lage versetzt werden, bei Erreichen eines vorgegebenen Drehmoments die Kraftübertragung zu unterbrechen, vorzugsweise geräuschlos, also ohne einem Aneinandervorbeigleiten oder Rattern von sich aus einem Eingriff lösenden Kupplungsklauen der vorgesehenen Kupplung.

Im folgenden wird daher speziell auch auf auf dem Schraubergebiet liegende Veröffentlichungen zum Stand der Technik eingegangen - allerdings mit Ausnahme der eine Kupplung für mit veränderlichen Geschwindigkeiten arbeitenden Getrieben für Kraftfahrzeuge, Drehbänke und sonstige Maschinen betreffenden und insofern gattungsfremden US-A-2 113 512 -, obwohl es sich versteht und darauf hingewiesen wird, daß die Erfindung nicht auf Schrauber oder Schraubwerkzeuge beschränkt ist, sondern überall dort Anwendung finden kann, wo bei kraftangetriebenen Elektrohandwerkzeugen eine Auftrennung der Antriebsverbindung zwischen antreibendem Elektromotor und Werkzeugausgangswelle gewünscht ist.

Bei sämtlichen dieser bekannten Schrauber oder auch Bohrmaschinen ist die Kupplung zwischen dem antreibenden Elektromotor und der Ausgangswelle des Werkzeugs so ausgebildet, daß konische, insgesamt eine Reibungskupplung bildende Ringflächen ineinandergreifen, wobei dann beispielsweise durch den Anpreßdruck, der bei der Handhabung des Geräts auf den mit dem Schraubendreherwerkzeug verbundenen Außen- oder Innenkegel der Kupplung ausgeübt wird, der Sitz der beiden Kegelflächen und damit deren Reibmitnahme progressiv, üblicherweise gegen Federdruck, verstärkt wird.

Die erwähnte Feder ist als Druckfeder ausgebildet und ermöglicht bei Druckwegnahme ein Lösen der beiden Kegelteile voneinander, die durch die Druckfeder voneinander abgedrückt werden.

In diesem Zusammenhang kann es auch sinnvoll sein, die Reibkupplungen einstellbar auszubilden, beispielsweise um in etwa eine Drehmomentvorgabe zu erzielen, beispielsweise indem für einen der Kegel ein Anschlag vorgesehen ist.

Es ist auch bekannt, eine Kupplung für ein kraftangetriebenes Schraubwerkzeug so auszulegen (DE-36 37 852 C1), daß dann, wenn bei Überschreiten eines vorgegebenen Grenzdrehmoments einander gegenüberstehende Klauen ein erstes Mal durchrutschen, weil sich der werkzeugseitige Klauenbereich vom antriebsseitigen Klauenbereich entfernt hat, ein schlagartiges Lösen der formschlüssigen Verbindung dadurch zu bewirken, daß eine zusätzliche Schleppkupplung eine andere Axialposition des schraubendreherseitigen Kupplungsklauenteils bestimmt.

Ferner ist es bei einem motorisch betriebenen Abschaltschrauber (DE-A-30 15 423) bekannt, daß bei Überschreiten eines voreingestellten Grenzdrehmoments eine Rastkupplung aufläuft und hierdurch ein Kupplungsteil bewegt, indem in Vertiefungen gehaltene Zylinderrollen eine Kupplungshülse abdrängen, wodurch eine Arretiervorrichtung anspricht.

Diese hält dann dieses Kupplungsteil in seiner beim Auflaufen der Rastkupplung eingereichten Stellung fest und erst durch ein Eindrücken der Werkzeugspindel über eine durch einen Druckpunkt markierte Stellung hinaus wird die Mitnahmekupplung formschlüssig erneut eingerückt. Durch eine solche Kupplung läßt sich allerdings ein geräuschloses Kuppeln nicht erreichen, vielmehr sind die verschiedenen Arbeitsbereiche, wie in dieser DE-A-30 15 423 ausdrücklich hingewiesen ist, durch den Unterschied zwischen einem kontinuierlichen Eindrehen im Normalbereich und einem schlagenden Eindrehen im Überlastbereich deutlich zu unterscheiden.

Gerade aber um zu vermeiden, daß nach dem Erreichen eines mittels Tiefenanschlag einstellbaren Grenzdrehmoment die Klauen der vorgesehenen Kupplung bei weiter bestehender Belastung so lange laufend gegeneinanderschlagen, wie der Schraubendreher noch in den Schraubenkopf eingreift, was zu einer erheblichen Geräuschbildung und wesentlichen Verschleißerscheinungen an den Klauen führt, wird an anderer Stelle (DE-A-35 10 605) versucht, die formschlüssige Wirkverbindung zum antriebsseitigen Kupplungsteil vollständig zu lösen. Zu diesem Zweck ist zwischen den beiden Hälften der vorgesehenen Klauenkupplung eine ebenfalls beidseitig Klauen oder Nockenvorsprünge aufweisende, federbelastete Zwischenscheibe angeordnet, die frei drehbar und axial verschiebbar auf der Werkzeugantriebswelle sitzt. Stirnseitig steht diese Zwischenscheibe auf ihrer einen Seite über Nocken und auf der anderen Seite über Klauen mit den entsprechend komplementär ausgebildeten angrenzenden Kupplungsteile in Verbindung, wobei auf einer Seite die Klauen axial aushebende Schrägflächen aufweisen, so daß sich die Zwischenscheibe auch axial verschieben kann. Die Zwischenscheibe ermöglicht dann in dem Moment, in welchem das Grenzdrehmoment erreicht ist, oder in welchem sich die axial verschiebliche Antriebswelle so weit nach außen bewegt hat (relativ zum Tiefenanschlag), daß die Nocken eines der Kupplungsbereiche erstmalig kein Drehmoment übertragen können, eine vollständige, federunterstützte Trennung dieser Kupplungsteile, da in diesem Moment auf der anderen Seite der Zwischenscheibe die Klauen von den Schrägflächen abrutschen und sich hierdurch der axiale Abstand im Nockenübertragungsbereich der Kupplung ergänzend öffnet. Problematisch kann hier die zusätzliche Anordnung der Zwischenscheibe und der entsprechend erhöhte Raumbedarf sein, wobei der Aufbau insgesamt komplizierter wird. Insbesondere bildet diese axial und radial frei bewegliche Zwischenscheibe ein zusätzliches, einem Verschleiß unterworfenes und daher eine mögliche Störanfälligkeit des Geräts gegebenenfalls erhöhendes Glied.

Einer solchen Problematik versucht eine weitere bekannte Kupplung für kraftangetriebene Schraubwerkzeuge (DE-PS 36 37 852) dadurch zu begegnen, daß auf die zusätzliche Zwischenscheibe vollständig verzichtet wird und der Übergangsbereich zwischen dem antriebswellenseitigen Kupplungsteil der Klauenkupplung und der Antriebswelle in einer besonderen Weise, hierdurch eine Schleppkupplung bildend, ausgebildet wird. Diese Schleppkupplung läßt eine relative Drehbewegung zwischen der Antriebswelle und diesem Kupplungsteil nur für einen geringen Winkel zu und wird dadurch realisiert, daß ein an der Antriebswelle drehfest angeordneter Querstift in geschlossene Bohrungen oder schräge Querführungen am Kupplungsteil eingreift. Durch diese schrägen Anschlagflächen wird gleichzeitig erreicht, daß bei einem Wandern des Querstiftes in seinen Führungen eine axiale Relativverschiebung zwischen dem Kupplungsteil und der Antriebswelle auftritt, die beim Auskuppeln des Geräts bei Erreichen der gewünschten Schraubtiefe in der bekannten Weise sicherstellt, daß die Trennung der Klauenkupplung bei erstmaligem Verschwinden des übertragenden Drehmoments (Erreichung des Grenzdrehmoments) durch zusätzliche Abstandsvergrößerung vollständig wird.

Eine solche Lösung entsprechend der DE-PS 36 37 852 wird schließlich durch ein weiteres bekanntes kraftangetriebenes Schraubwerkzeug (EP-0 382 149 A1) insofern ergänzt, daß bei Beibehaltung der durch die Schrägfläche im Übergangsbereich bewirkten schnellen Auskuppelvorgänge am antriebswellenseitigen Kupplungsteil mindestens eine axial nach außen zum Schraubwerkzeug gerichtete offene Ausnehmung in Form einer Führungstasche gebildet ist, deren Ausnehmungsgrund zur Antriebswellenlängsachse schräg verläuft. In diese Führungstasche greift ein an der Antriebswelle drehfester Querstift zur Bildung der Schleppkupplung ein.

Der Erfindung liegt die Aufgabe zugrunde, diese, sowohl im Aufbau als auch in der Funktion zum Teil sehr komplizierten kraftangetriebenen Elektrohandwerkzeuge dahingehend zu verbessern, daß bei Beibehaltung eines einwandfreien, geräuschfreien Auskuppelns bei Erreichen der vorgegebenen Schraubtiefe ein wesentlich einfacher Aufbau erzielt werden kann.

Auf dem Gebiet des Kupplungswesens ist es ferner bekannt (US-A-2 113 512), den weiter vorne schon erwähnten Aufbau einer Reibkupplung mittels konischer Ringflächen noch dadurch zu ergänzen, daß zwischen dem konischen Innenkegel und dem konischen Außenkegel Mitnahmeelemente, die von einem eigenen Käfig zueinander im Abstand gehalten werden, so angeordnet werden, daß diese durch den zunehmenden Druck beim Ineinanderpressen der konischen Ringflächen auf ein äußeres Kupplungsteil, entlang von dessen inneren Kegelstumpfmantel sie schleifen, schließlich eine Mitnahmewirkung ausüben. Diese Mitnahmeelemente, die an der Drehmitnahme aktiv beteiligt sind, sind tonnenförmig ausgebildet und können so lediglich in axialer Richtung durch eine Drehbewegung verschoben werden, was der Einkuppelbewegung entspricht. Damit infolge dieser zwischengeschalteten, tonnenförmigen Mitnahmeelemente nicht zwei zueinander konzentrische Reibflächenbereiche entstehen, ist ferner der Außenmantel des Innenkegels polygonal ausgebildet, wobei die tonnenförmigen Mitnahmeelemente am Innenkegel jeweils ein geradliniges Segment besetzen und gegenüber diesem nicht durchrutschen können.

Offensichtlich um den punktförmigen Anpreßdruck der tonnenförmigen Mitnahmeelemente auf die Innenfläche des Außenkegels zu verringern, umfaßt diese bekannte Kupplung ferner die Möglichkeit, einen zusätzlichen aufweitbaren Zwischenring zwischen der Innenfläche des Außenkegels und den tonnenförmigen Mitnahmeelementen anzuordnen, der diese in eigenen Ausnehmungen dann drehfest aufnimmt und selbst mit seiner Außenfläche, da er sich aufweiten kann, in geschlossener Anlage an der dann ebenfalls zylindrisch ausgebildeten Innenfläche des Außenkegels anliegt und diesen durch Reibungseingriff mitnimmt.

### Vorteile der Erfindung

Die Erfindung löst diese Aufgabe mit den Merkmalen des Anspruchs 1 und hat den Vorteil, daß überhaupt nur eine einzige Kupplung erforderlich ist, im Gegensatz zu den bisher an einer Stelle mindestens erforderlichen zwei Kupplungseinrichtungen (Mitnahmekupplung, Schleppkupplung) und dennoch ein vollkommen geräuschfreies Auskuppeln möglich ist. Gegenüber den einfachen Kegelstumpfkupplungen ergibt sich eine wesentlich verbesserte und verstärkte Mitnahme-Reibwirkung durch einen kraftverstärkenden Umlenkeffekt mit Hilfe von Kraftumlenkelementen, die auf eine aufweitbare Kupplungszange arbeiten.

Der Einkuppelvorgang erfolgt überhaupt nur dann, wenn auf das jeweilige Werkzeug von der Bedienungsperson ein Arbeitsdruck ausgeübt wird, wie er beispielsweise erforderlich ist, wenn mittels eines Schraubers, der allerdings das bevorzugte Ausführungsbeispiel vorliegender Erfindung darstellt, eine Schraube in ein Paneel oder in ein sonstiges Material eingeschraubt werden muß. Ein solcher Andruck ist schon deshalb erforderlich, damit der jeweilige Schraubbit als Einsatz in der Werkzeugaufnahme seine Wirkverbindung mit der einzuschraubenden Schraube nicht verliert - gleichzeitig hiermit ergibt sich ein weicher, vollkommen ratterfreier Kupplungseingriff, der sich erst dann wieder selbsttätig löst, wenn aufgrund einer voreingestellten Schraubtiefe, beispielsweise mittels eines Tiefenanschlags, der von der Bedienungsperson ausgeübte Arbeitsdruck von der Schraube und damit von der diese in Drehbewegung versetzenden Werkzeugausgangswelle weggenommen wird.

Untersuchungen bei Dauererprobungen haben dabei ergeben, daß trotz eines durch Reibwirkung bewirkten Kupplungseingriffs der auftretende Verschleiß minimal ist, was unter anderem auch auf die großen, am Kupplungseingriff beteiligten Flächen zurückzuführen ist, so daß sich nach Langzeitgebrauch wesentlich günstigere Verschleißbilder ergeben als bei solchen Arbeitsgeräten, die mit mehreren, ineinandergeschalteten Kupplungen arbeiten müssen.

Ein weiterer Vorteil vorliegender Erfindung besteht darin, daß trotz des Verzichts auf einen formschlüssigen Eingriff auch der Einkuppelvorgang problemlos verläuft, da es auch bei geringeren Anpreßdrücken sehr schnell zum vollständigen Kraftschluß zwischen den beteiligten Kupplungsteilen ohne jedes Durchrutschen kommt. Dabei ist es ferner unerheblich, ob im Moment des Einkuppelns der antreibende Elektromotor schon dreht, also den einen Kupplungsteil im Getriebekopfbereich mitnimmt, oder ob erst durch Betätigung eines elektrischen Schalters der Elektromotor von der Bedienungsperson eingeschaltet wird, wenn durch dann schon auf das Handwerkzeug ausgeübten Arbeitsandruck die Kupplung sozusagen eingerückt ist. In beiden Fällen ergibt sich eine geräuschlose, problemlose Mitnahme der Werkzeugausgangswelle und ein sicheres Auskuppeln in dem Moment, in welchem durch den Tiefenanschlag der Einschraubvorgang als beendet angesehen werden kann.

Dabei ist von weiterem Vorteil, daß die erfindungsgemäße Lösung vollständig ohne häufig aufwendig in der Bearbeitung herzustellende Klauenformen an Kupplungsgliedern auskommt und lediglich Komponenten benötigt, die durch einfache Drehvorgänge, gegebenenfalls mit nachfolgenden Feinschleifarbeiten, hergestellt werden können. Die vollständig kraftschlüssig arbeitende Kupplung benötigt daher eine gewisse Andrückkraft zur Drehmitnahme der Werkzeuggeräte-Ausgangswelle und beendet den Einschraubvorgang nach Erreichen der gewünschten Einschraubtiefe selbsttätig geräuschlos präzise und besonders verschleißarm, im übrigen auch dann, wenn der Benutzer - auch ohne daß ein Tiefenanschlag wirksam wird - einfach die Andrückkraft wegnimmt.

Durch die in den Unteransprüchen aufgeführten Maßnahmen sind vorteilhafte Weiterbildungen und Verbesserungen der Erfindung möglich. Besonders vorteilhaft ist die Ausbildung der kraftschlüssigen Reibkupplung in Form von ineinandergreifenden, sich parallel zur Ausgangswelle erstreckenden zylindrischen Ringfläche, wobei durch die von dem Benutzer ohnehin zu leistenden Andrückarbeit aufgrund einer nach innen gerichteten geringfügigen Bewegung der Werkzeugausgangswelle gleichzeitig eine erhebliche Kraftverstärkung und eine Umlenkung in eine für die Kupplung ausnutzbare radiale Kraftwirkung erfolgt. Zu diesem Zweck können Kugeln vorgesehen sein, die etwa nach Art eines Freilaufs eine Abtriebszange arretieren, die dadurch antriebsseitig mit einer drehangetriebenen Kupplungshülse in Wirkverbindung tritt.

Dabei eignet sich die durch die Erfindung realisierte kraftschlüssige Reibkupplung auch für sehr große zu übertragende Drehmomente, da es sehr schnell zu einem Formschluß kommt.

In einer weiteren Ausgestaltung können die beteiligten Ringflächen mit vorgegebenen Winkeln kegelförmig ausgebildet sein oder, falls gewünscht, ergänzend oder allein ein, allerdings schwaches Profil aufweisen, wodurch eine Art "Formschlüssigkeit" auch dann sichergestellt ist, wenn es während des Arbeitens zu sich ändernden Anpreßdrücken kommt, wodurch jegliches (ungewollte) Durchrutschen vermieden wird.

### Zeichnung

Ausführungsbeispiele der Erfindung sind in der Zeichnung dargestellt und werden in der nachfolgenden Beschreibung näher erläutert. Es zeigen:
- Fig. 1: eine vertikale Schnittansicht als Teildarstellung durch einen vorderen Getriebekopfbereich speziell eines Schraubers (Abschaltschraubers) in der ausgekuppelten Position der Ausgangswelle und
- Fig. 2: die gleiche Darstellung der Fig. 1, jedoch mit voll eingekuppelter Ausgangswelle, während die
- Fig. 3 und 4: in dieser Reihenfolge in starker Vergrößerung lediglich den Kupplungsbereich in der der Fig. 1 entsprechenden voll ausgekuppelten und der der Fig. 2 entsprechenden voll eingekuppelten Position zeigen; die
- Fig. 5 und 6: zeigen in seitlicher Schnittdarstellung sowie in Ansicht von vorn einen der die Reibkupplung bei vorliegender Erfindung bildenden Kupplungsteile in bevorzugter Ausführung.

### Beschreibung der Ausführungsbeispiele

Der Grundgedanke vorliegender Erfindung besteht darin, eine etwa nach Art eines Freilaufs ausgebildete Reibkupplung unter Verzicht auf einen ausgeprägten formschlüssigen Eingriff zwischen der Ausgangswelle eines Elektrohandwerkzeugs und dem diese mindestens indirekt antreibenden Elektromotor anzuordnen und so auszubilden, daß bei auf das Elektrohandwerkzeug ausgeübten Arbeitsdruck, mit welchem beispielsweise eine Schraube in ein beliebiges Material einzuschrauben ist, die Kupplung greift und bei Erreichen eines Grenzdrehmoments bzw. dann, wenn ein Tiefenanschlag die Materialoberfläche kontaktiert, durch diesen eine Gegenkraft zur Andrückkraft der Bedienungsperson am Gerät erzeugt wird, wodurch die kraftschlüssige Kupplung geräuschlos und präzise unterbricht.

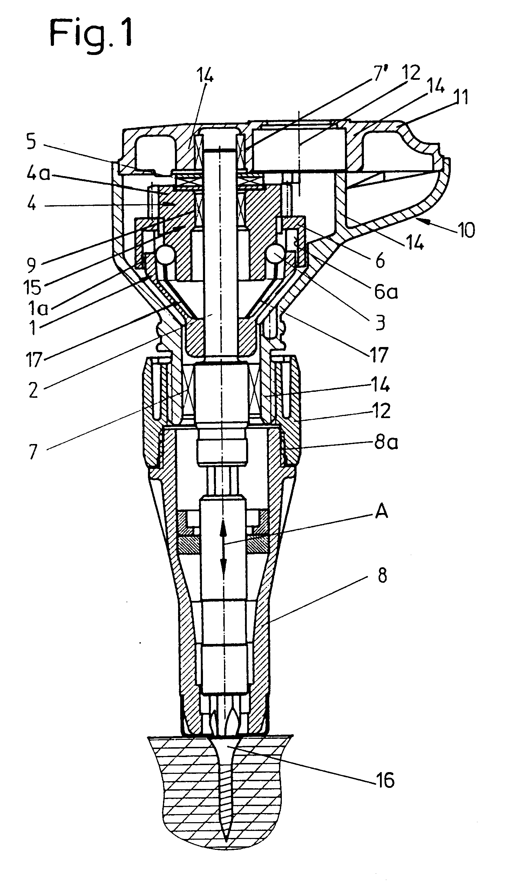

Da in allen Figuren gleiche Teile mit gleicher Funktion dargestellt sind, sind auch die in den Figuren auftretenden Bezugszeichen jeweils identisch. Das in Fig. 1 gezeigte, die Kupplung im wesentlichen enthaltende Teilgehäuse wird im folgenden als Getriebekopf 10 bezeichnet und ist auf ein nur noch teilweise dargestelltes angrenzendes, weitere Komponenten eines Elektrohandwerkzeugs aufnehmendes Gehäuse 11 aufgesetzt, angesetzt, angeschraubt oder angeflanscht oder sonstwie befestigt, wobei eine Elektromotor-Abtriebswelle in Fig. 1 lediglich noch strichpunktiert bei 12 angedeutet ist, die beispielsweise ein Ritzel tragen kann, was mit einem ersten Kupplungsteil 4 kämmt. Natürlich versteht es sich, daß anstelle eines direkt mit einer Motorausgangswelle verbundenen Ritzel hier auch ein Vorgelege oder ein sonstiges Zwischengetriebeteil vorgesehen sein kann.

An den Getriebekopf 10 ist ein einstellbarer Tiefenanschlag 8 angesetzt, der als hohle, sich verjüngende Hülse ausgebildet ist und beispielsweise über ein Zwischengewinde 8a mit einer vorzugsweise aus Kunststoff bestehenden Drehhülse 12 in Wirkverbindung steht, die auf das untere, der Schraube zugewandte Ende des Getriebekopfs 10 zur Durchführung einer Drehbewegung aufgesetzt ist.

Durch Getriebekopf 10 und Tiefenanschlag 8 erstreckt sich eine Ausgangswelle 2, die in mehreren Radiallagern 7, 7' drehbar, jedoch axial, also in Richtung des Doppelpfeils A verschieblich, gelagert ist.

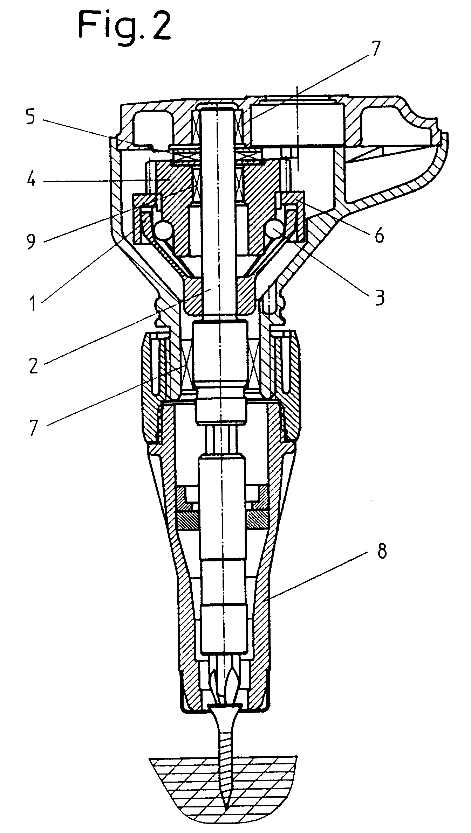

Es ist zweckmäßig an dieser Steile darauf hinzuweisen, daß der grundsätzliche Aufbau der einer Werkzeug-Drehmitnahme dienenden, insofern vorderen Handwerkzeug-Teile wie Getriebekopf, Tiefenanschlag, Lagerung für die Ausgangswelle und deren Form, grundsätzlich beliebig sein kann und die in den Fig. 1 bis 4 dargestellte Ausführungsform lediglich und speziell für einen Abschaltschrauber als bevorzugt angesehen wird.

Getriebekopfgehäuse 10, das teilweise dargestellte Motoraufnahmegehäuse 11 sowie die restlichen Komponenten weisen jeweils Rippen, Vorsprünge, Ausnehmungen u.dgl. auf, die insgesamt mit 14 bezeichnet sind und der Lagerung diverser Teile, beispielsweise der Radiallager für die Ausgangswelle 2 oder der Aufnahme und Fixierung von sonstigen Komponenten dienen können.

Der Bereich der Reibkupplung ist mit 15 bezeichnet und umfaßt einen antriebsmotorseitigen Kupplungsteil 4, der bei dem dargestellten Ausführungsbeispiel frei drehbar auf der Ausgangswelle 2 gelagert ist, aber natürlich auch auf andere Weise seine Lagerung erfahren kann, sowie einen ausgangswellenseitigen Kupplungsteil 1, die eine Mitnahmefunktion eingehen können, in Abhängigkeit zum auf die Ausgangswelle 2 ausgeübten Anpreßdruck.

Zu diesen zweck sind an den beiden Kupplungsteilen 1 und 4 aufeinander ausgerichtete Ringflächen vorgesehen, die in Abhängigkeit und aufgrund der Wirkung des Anpreßdrucks aufeinandergepreßt werden, so daß der vom Motor 4 angetriebene Kupplungsteil die Ausgangswelle 2 mitzunehmen imstande ist.

Im einzelnen, jedoch nicht den Rahmen vorliegender Erfindung beschränkend, besteht der motorseitige Kupplungsteil 4 aus einem Kupplungszahnrad 4a, welches über ein eigenes Radiallager 9 auf der Ausgangswelle 2 gelagert ist und sich ferner über ein Axiallager 5 rückwärts, also auf der zur einzuschraubenden Schraube 16 abgewandten Seite an stationären Gehäuseteilen abstützt.

An dem Kupplungszahnrad 4a ist ein Kupplungsring, der im folgenden als Kupplungshülse 6 bezeichnet wird, befestigt, beispielsweise mittels Keilnuten drehfest gehalten; es versteht sich aber, daß die Kupplungshülse 6 auch einstückig mit dem Kupplungszahnrad 4a ausgebildet sein kann, was lediglich eine Frage der vereinfachten Herstellung und Montage der einzelnen Teile bedeutet.

Die Kupplungshülse 6 bildet (bei dem dargestellten Ausführungsbeispiel) nach innen eine erste, sich in axialer Richtung erstreckende, radiale Kupplungsringfläche 6a aus, an welcher eine Gegenkupplungsringfläche 1a zur Anlage kommt, nämlich an diese gepreßt wird, wenn auf das Elektrohandwerkzeug ein Arbeitsdruck ausgeübt wird, der eine nach innen gerichtete Verschiebebewegung der Ausgangswelle 2 nach sich zieht.

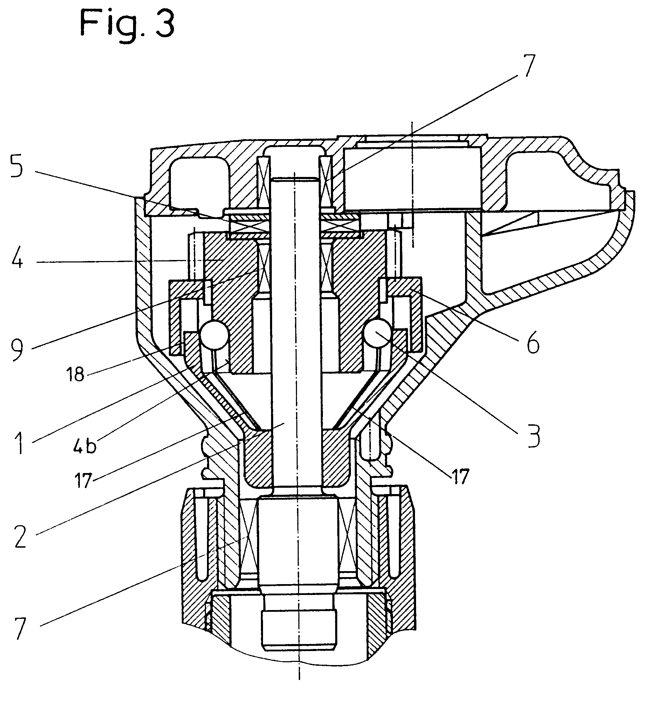

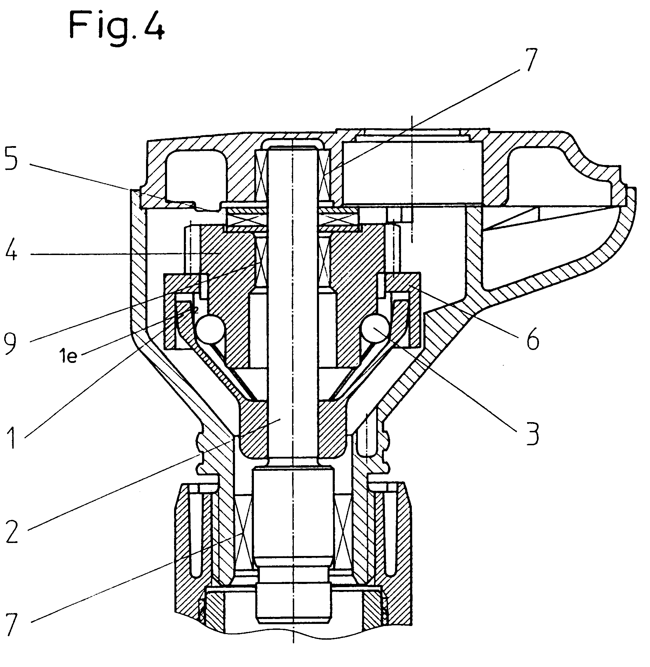

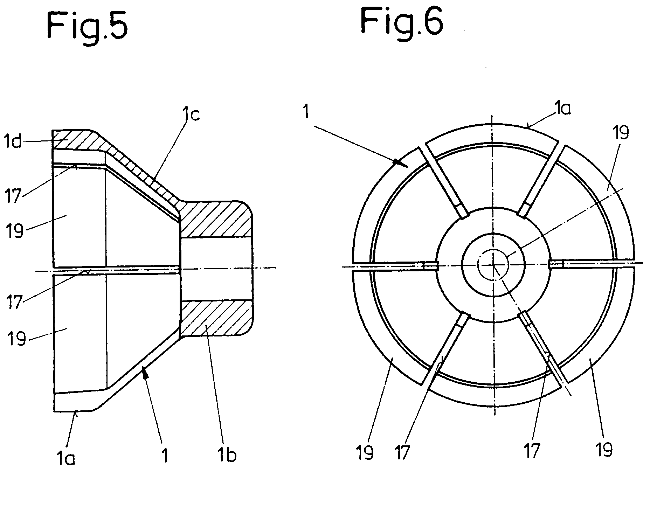

Zur weiteren Erläuterung wird zunächst auf die Darstellung der Fig. 5 und 6 und im folgenden auf die vergrößerten Darstellungen der Fig. 3 und 4 verwiesen, da die folgenden Erläuterungen sich speziell mit dem Kupplungsaufbau als bevorzugtes Ausführungsbeispiel beschäftigen.

So ist der andere Kupplungsteil 1 in Form einer Art Kupplungszange aufgebaut, die über eine Nabe 1b verfügt, die sowohl drehfest als auch ohne die Möglichkeit einer axialen Verschiebung auf der Ausgangswelle 2 sitzt, so, wie dies in den Fig. 3 und 4 dargestellt ist.

Der Kupplungsteil 1 verfügt ferner über Übergangsbereiche, die zu der aufgeweiteten Ringform der Gegenkupplungsfläche 1a führen, und zwar bestehen diese Übergangsteile aus einer sich aufweitenden, bevorzugt mit der Nabe 1b einstückigen Kegelform 1c, die einstückig in einen bevorzugt auch verdickten Ringzylinder 1b übergeht, der mit seiner Außenfläche die Gegenkupplungsfläche 1a bildet.

Bevorzugt ist sowohl der Kegelbereich 1c als auch der Ringzylinder 1d bis zur Nabe mehrfach geschlitzt ausgebildet, wobei beispielsweise, wie die Darstellung der Fig. 6 zeigt, insgesamt sechs Schlitze 17 vorgesehen sein können, so daß sich jeweils Kupplungsteilsegmente von etwa 60° ergeben.

Durch die Schlitzung ergibt sich erkennbar die Möglichkeit, den Kegelbereich aufzuweiten, was gleichzeitig auch einer Aufweitung im Bereich des Ringzylinders entspricht, wobei ferner die einzelnen Segmente eine eigene Federsteifigkeit aufweisen, die bei der im folgenden noch zu erläuternden Kupplungsfunktion die Tendenz hat, einer Aufweitung entgegenzuwirken.

Betrachtet man im folgenden wieder die Darstellungen der Fig. 3 und 4, dann erkennt man, daß als letztes den Kupplungsaufbau vervollständigende Element die axiale Kraftwirkung der Andrückkraft umlenkende Mittel vorgesehen sind, damit die beiden, zum Eingriff gelangenden Kupplungsflächen 6a an der Kupplungshülse 6 bzw. dem Kupplungszahnrad 4a und die Außenfläche 1a des Ringzylinders in einen eine Drehmitnahme bewirkten Eingriffszustand gelangen können.

Bei dem dargestellten Ausführungsbeispiel handelt es sich um Druckelemente, auf die die Innenfläche des Ringzylinders 1b der Kupplungszange bei axialer Verschiebung aufgleitet, was gleichzeitig zu einer radialen Aufweitung des Ringzylinders führt, so daß dessen Außenfläche als Gegenkupplungsfläche 1a an der Innenfläche 6a der Kupplungshülse 6 zur Anlage kommt.

Um hier die Reibung zu reduzieren, sind Kugeln 3 vorgesehen, die in einer geeigneten Ringausnehmung 4b des Kupplungszahnrads 4a sitzen, beispielsweise in jeweils eigenen, etwa durch Einfräsung gebildete Taschen oder auch die Ringform der Ausnehmung 4b vollständig peripher umlaufend ausfüllend und gehalten durch den auch im ausgekuppelten Zustand (siehe Fig. 3) die Kugeln 3 immer noch mindestens teilweise überdeckenden Teilringzylinder der Kupplungszange.

Es ergibt sich dann folgende Funktion. Wird bei über den nicht dargestellten antreibenden Elektromotor das erste Kupplungsteil 4 als Kupplungszahnrad 4a in eine Drehbewegung versetzt und befindet sich die Ausgangswelle 2 zunächst in der in Fig. 3 dargestellten, also in Richtung auf die einzuschraubende Schraube 16 ausgefahrenen Position (siehe auch Fig. 1), dann existiert ein wenn auch nur sehr geringer, in der Darstellung der Fig. 3 auch größer dargestellter Abstand 18 zwischen den erwähnten, aufeinander ausgerichteten Kupplungsringflächen von Kupplungshülse 6 und Ringzylinder 1d der Kupplungszange.

Wird in der Arbeitsstellung, also im Übergang von Fig. 3 auf Fig. 4 die Ausgangswelle 2 mit der mit ihr fest verbundenen Kupplungszange als anderem Kupplungsteil 1 in Richtung auf das Kupplungszahnrad 4a gedrückt, dann läuft die innere Ringfläche 1e des Ringzylinders 1d auf die Kugeln 3 auf und aufgrund der Mehrfachschlitzung der Kupplungszange kann diese sich aufweiten, so daß die einzelnen Ringzylindersegmente 19, etwa entsprechend der Darstellung der Fig. 4 nach außen gedrückt werden und die beiden gegenseitigen Kupplungsringflächen zur Anlage kommen. Es kommt dann zur Drehmitnahme der Ausgangswelle 2.

Erkennbar ergibt sich durch die Kraftumlenkung mittels der Kugeln 3 aus der merklichen, einwärts gerichteten Bewegung der Ausgangswelle 2 ein wesentlich geringerer, zurückzulegender Restweg zwischen den jeweiligen Kupplungsringflächen, so daß es zu einer erheblichen, unter Umständen sogar extremen Kraftverstärkung kommt, so daß auch bescheidene, vom Benutzer ausgeübte Andruckkräfte genügen, um eine einwandfrei, nicht rutschende Drehmitnahme zu gewährleisten.

Hier ist noch eine weitere, wesentliche Ausgestaltung vorliegender Erfindung von Bedeutung, die darin besteht, daß im Bereich der am Einkuppelvorgang einschließlich der Kugeln beteiligten Komponenten eine gewisse Konizität von Vorteil sein kann, beispielsweise indem sich die einzelnen Teilsegmente des Ringzylinders 1d in Zeichenebene der Fig. 4 von unten nach oben, also von der Schraube zum Motor hin gesehen verjüngen, so daß zunächst bei anfänglichem Einschieben des Kupplungsringzylinders 1d in das Innere der Kupplungshülse 6 die Flächenpressung der einander gegenüberstehenden Kupplungsringflächen gering, jedoch sehr schnell wesentlich kräftiger wird, bis sich praktisch eine Art Verklemmzustand zwischen den beiden Kupplungskomponenten Ringzylinder 1d und Innenfläche der Kupplungshülse 6 ergibt, bewirkt durch die nach außen wirkende Kraft der im Kupplungszahnrad 4a sitzenden Kugeln 3, die ja nicht ausweichen können.

Die Kegelform kann an der Innenfläche 1e des Ringzylinders 1d und/oder an dessen Außenfläche 1a als Gegenkupplungsfläche und/oder auch an der Innenfläche 6a der Kupplungshülse 6 vorgesehen sein, wobei die jeweiligen Winkel sich am besten empirisch bestimmen lassen und auch zum gewissen Teil von den jeweils zu übertragenden Drehmomenten abhängen. So haben sich beispielsweise Konuswinkel im Bereich von etwa 7° in Versuchen als besonders günstig herausgestellt.

Es ist vorteilhaft, wenn die jeweiligen Ringflächen geschliffen und gehärtet sind, wobei dann auch die einzelnen Segmente ihre federnden Eigenschaften bewahren. Da beim Andrücken der Kupplungszange eine Aufweitung stattfindet und hierdurch die Kupplungsmitnahme kraftschlüssig hergestellt wird, erhält sich die Kupplungszange die Tendenz, aus der aufgeweiteten Position aufgrund ihrer Federsteifigkeit wieder zurückzufahren, so daß beim Aufsetzen des Tiefenanschlags auf die Materialoberfläche, bei welcher die bisher von der Ausgangswelle 2 aufgenommene axiale Anpreßkraft auf den Tiefenanschlag übergeleitet wird, ein sofortiges, geräuscharmes Auskuppeln erfolgt. Die Kupplungselemente geraten daher unmittelbar in die in den Fig. 1 und 3 gezeigte Leerlaufstellung, in welcher die Ausgangswelle 2 und die Kupplungszange stillstehen. Ergänzend kann hier auch noch eine Druckfeder eingesetzt werden, die die Ausgangswelle axial nach außen drückt und dadurch zum Lösen der Kupplung beiträgt bzw. dies veranlaßt.

Dabei trägt eine weiter vorn schon kurz angesprochene Ausgestaltung in vorteilhafter Weise noch zum leichten Lösen der Kupplung beim Absetzen des von dem Benutzer des Werkzeugs aufgebrachten Arbeitsdrucks und/oder beim Aufsetzen des Tiefenanschlags auf die Materialoberfläche bei, die darin besteht, daß die Kupplungshülse 6 als getrenntes Bauteil zum ersten Kupplungsteil 4 bzw. des von diesem gebildeten Kupplungszahnrads 4a ausgebildet ist und mit dem Kupplungszahnrad 4a lediglich z.B. durch eine Mehrkeilverzahnung bei hierdurch ermöglichter, wenn auch nur geringer axialer Beweglichkeit in drehfester Wirkverbindung steht.

Es hat sich nämlich bei Untersuchungen herausgestellt, daß sich, wie ohne weiteres einsehbar, beim Eingriff der Kupplung ein gewisser Klemmzustand ergibt, der auch für die rutschfreie Übertragung des Drehmoments verantwortlich ist und aus diesem Klemmzustand löst sich die Kupplungszange dann optimal und besonders leicht, wenn sich im Bereich der Kupplungshülse diese geringe axiale Beweglichkeit ergibt. Die axiale Beweglichkeit der Kupplungshülse trägt also dazu bei, daß bei weiterlaufendem Motor und der hieraus resultierenden Drehbewegung des Kupplungszahnrads 4a die drehmitgenommene Kupplungshülse 6 aufgrund ihrer axialen Freigängikeit unterstützend auf die von der Kupplungszange ausgeübte Federwirkung einwirkt, sich aus der Klemmverbindung heraus aufzuspreizen und nach unten, also in Richtung auf den Werkzeugeinsatz oder die einzuschraubende Schraube wegzurutschen, wodurch die Kupplung sich aus der Position der Fig. 4 in die gelöste Position der Fig. 3 begibt.

Die geringe axiale Beweglichkeit der Kupplungshülse 6 wird einerseits begrenzt durch die Zahnflanken des Kupplungszahnrads 4, von welchem die Hülse 6 getragen ist, und andererseits dadurch, daß die die Drehmitnahme bewirkenden Keilnuten am Kupplungszahnrad bzw. an der Hülse eine vorgegebene Länge aufweisen und die axiale Beweglichkeit nur innerhalb der Nuten möglich ist.

Bei einwandfreier Abstimmung der Federkräfte der Kupplungszange, der Konusverhältnisse der miteinander den Kupplungseingriff bewirkenden Ringflächen, der von den Kugeln aufgebrachten Klemmwirkung sowie der axialen Beweglichkeit der Kupplungshülse 6 ergibt sich dann ein einwandfreier Betrieb mit sicherem Einkuppeln, rutschfreier Dauerbelastung und einwandfreiem Auskuppeln ohne größeren Verschleiß der Reibkupplungskomponenten.

## Patentansprüche

1. Kraftangetriebenes Elektrohandwerkzeug, insbesondere Bohrmaschine, Schraubwerkzeug mit Tiefenanschlag u.dgl., mit einer bei Beendigung des Arbeitsvorgangs die Antriebsverbindung zwischen antreibendem Elektromotor und Werkzeug-Ausgangswelle lösenden Reibkupplung, wobei die Ausgangswelle axial verschieblich gelagert und die Kupplung die Antriebsverbindung aufgrund eines auf die Ausgangswelle ausgeübten Anpreßdrucks durch Reibschluß herstellt und bei reduziertem oder fehlendem Antriebsdruck die Antriebsverbindung wieder auftrennt, mit einem ersten, vom Motor angetriebenen Kupplungsteil und einem zweiten, drehfest und axial unverschieblich auf der Ausgangswelle gelagerten Kupplungsteil, **dadurch gekennzeichnet**, daß das auf der Ausgangswelle (2) drehfest gelagerte Kupplungsteil (1) eine Kupplungszange mit gegen seine eigene Federsteifigkeit aufweitbarem Ringzylinder (1d) ist, der eine äußere Kupplungsringfläche (1a) aufweist, die in eine vom ersten Kupplungsteil (4) gebildete Kupplungshülse (6) eintaucht, und daß den Anpreßdruck der Ausgangswelle (2) in eine radiale Aufweitung der Kupplungsringfläche (1a) innerhalb der Kupplungshülse (6) des ersten Kupplungsteils (4) umsetzende, von Kugeln (3) gebildete Kraftumlenkelemente vorgesehen sind, die vom ersten Kupplungsteil (4) aufgenommen sind, so daß sich durch die von der axialen Verschiebbarkeit der Ausgangswelle bewirkten Relativverschiebung zwischen Kupplungshülse (6) einerseits und dem ausgangswellenfesten Ringzylinder (1d) andererseits bei dessen gleichzeitiger radialer Aufweitung die Reibkupplungsmitnahme ergibt.

2. Kraftangetriebenes Elektrohandwerkzeug nach Anspruch 1, dadurch gekennzeichnet, daß die miteinander die Drehmitnahme bewirkenden Kupplungsringflächen (1a, 6a) von erstem und zweitem Kupplungsteil (4, 1) parallel zur Ausgangswelle (2) verlaufen, wobei die durch den auf die Ausgangswelle (2) ausgeübten Anpreßdruck erzeugte, auf die Kraftumlenkelemente (3) zur Einwirkung gelangende Druckwirkung verstärkt die Kupplungsringfläche (1a) aufweitet.

3. Kraftangetriebenes Elektrohandwerkzeug nach Anspruch 1 oder 2, dadurch gekennzeichnet, daß die innere Kupplungsringfläche (6a) des ersten Kupplungsteils (4) und die äußere Kupplungsringfläche (1a) des zweiten Kupplungsteils (1) entsprechend der axialen Verschiebbarkeit der Ausgangswelle (2) eine mehr oder weniger starke Überdeckung aufweisen.

4. Kraftangetriebenes Elektrohandwerkzeug nach Anspruch 1, dadurch gekennzeichnet, daß das erste drehangetriebene Kupplungsteil (4) ein Kupplungszahnrad (4a) mit der an diesem befestigten Kupplungshülse (6) umfaßt, wobei die die Anpreßwirkung auf den aufweitbaren Ringzylinder (1d) des zweiten Kupplungsteils ausübenden Kugeln (3) relativ zur Antriebswelle (2) und Ringzylinder (1d) stationär gelagert sind.

5. Kraftangetriebenes Elektrohandwerkzeug nach Anspruch 4, dadurch gekennzeichnet, daß das Kupplungszahnrad (4a) mit Kupplungshülse (6) drehbar und relativ zum Getriebekopf (10) des Elektrohandwerkzeuges axial unverschieblich angeordnet ist und das zweite Kupplungsteil (1) im Abstand zum Kupplungszahnrad (4a) auf der Ausgangswelle (2) drehfest und axial unverschieblich mittels einer Nabe (1b) angeordnet ist, von der in Richtung auf die Kupplungshülse (6) durch Axialschlitzung radial aufweitbare, den Ringzylinder (1d) bildende Ringzylindersegmente ausgehen, wobei auf Höhe der Innenfläche (1e) des Ringzylinders (1d) die die Kraftumlenkung bewirkenden Kugeln (3) in einer Ringausnehmung (4b) des Kupplungszahnrades (4a) sitzen.

6. Kraftangetriebenes Elektrohandwerkzeug nach Anspruch 5, dadurch gekennzeichnet, daß die innere, der Einwirkung der Kugeln (3) am Kupplungszahnrad (4a) ausgesetzte Fläche (1e) am Ringzylinder (1d) und/oder die äußere Kupplungsgegenfläche (1a) am Ringzylinder (1d) und/oder die innere Kupplungsfläche (6a) an der Kupplungshülse (6) eine vorgegebene Konizität (1 bis 10°, vorzugsweise 3 bis 7°) aufweisen.

7. Kraftangetriebenes Elektrohandwerkzeug nach Anspruch 5, dadurch gekennzeichnet, daß am Getriebekopf (10) mittels einer Gewindebuchse (12) ein höhenverstellbarer Tiefenanschlag (8) angeordnet ist, der die Ausgangswelle (2) umgibt.

8. Kraftangetriebenes Elektrohandwerkzeug nach Anspruch 5, dadurch gekennzeichnet, daß die Ausgangswelle (2) über zwei im Gehäuse des Getriebekopfes (10) und/oder im angrenzenden Motorgehäuse angeordnete Radiallager (7, 7') und das Kupplungszahnrad (4a) auf der Ausgangswelle (2) über ein weiteres Radiallager (9) sowie gegenüber dem Getriebekopfgehäuse (10) und/oder dem Motorgehäuse mittels eines axialen Stützlagers (5) gelagert ist.

9. Kraftangetriebenes Elektrohandwerkzeug nach Anspruch 1, dadurch gekennzeichnet, daß eine zusätzliche, die Ausgangswelle (2) in ihre nach außen vorgeschobene Leerlaufposition axial vorspannende Druckfeder vorgesehen ist.

10. Kraftangetriebenes Elektrohandwerkzeug nach Anspruch 4, dadurch gekennzeichnet, daß die auf die Innenfläche des Ringzylinders (1d) einwirkenden Kugeln (3) in separaten Aufnahmetaschen am Kupplungszahnrad (4a) sitzen oder peripher aneinandergrenzend einen Aufnahmeringraum am Kupplungszahnrad (4a) ausfüllen.

11. Kraftangetriebenes Elektrohandwerkzeug nach Anspruch 1, dadurch gekennzeichnet, daß die Kupplungshülse (6) am ersten Kupplungsteil (4) von diesem drehfest, jedoch mit einer vorgegebenen axialen Beweglichkeit aufgenommen ist.

12. Kraftangetriebenes Elektrohandwerkzeug nach Anspruch 11, dadurch gekennzeichnet, daß die Kupplungshülse (6) am Kupplungszahnrad (4a) des vom Motor angetriebenen Kupplungsteils (4) über eine Mehrkeilverzahnung angetrieben ist, die über einen vorgegebenen Abstand eine freie axiale Beweglichkeit der Kupplungshülse (6) relativ zum Kupplungszahnrad (4a) sicherstellt, derart, daß sich eine einwandfreie Trennung der bei Drehmitnahme miteinander in kraftschlüssiger und/oder formschlüssiger Wirkverbindung stehenden Kupplungsringflächen (1a, 6a) aus der eingenommenen Klemmposition ergibt.

## Claims

1. A power-driven electric hand tool, in particular a drill, a screwdriver with a depth stop and the like, having a faction coupling disconnecting the driving connection between the driving electric motor and the tool output-shaft upon completion of the operation, the output shaft being mounted so as to be axially displaceable and the coupling producing the driving connection through a friction connection on account of contact pressure exerted upon the output shaft and disconnecting the driving connection again when the driving pressure is reduced or absent, having a first coupling part driven by the motor and a second coupling part mounted on the output shaft so as to be fastened against relative rotation and so as to be axially-fixed, characterised in that the coupling part (1) mounted on the output shaft (2) so as to be fastened against relative rotation is coupling pincers with an annular cylinder (1d) which can be widened against its own elastic rigidity and which has an outer coupling-annular-surface (1a) projecting into a coupling sleeve (6) formed by the first coupling part (4), and in that force deflection members formed by bails (3) and converting the contact pressure of the output shaft (2) into a radial widening of the coupling annular surface (1a) within the coupling sleeve (6) of the first coupling part (4) are provided, these force deflection members being received by the first coupling part (4), so that the relative displacement between the coupling sleeve (6) on the one hand and the annular cylinder (1d) fastened to the output shaft on the other hand which is effected by the axial displaceability of the output shaft leads to the friction coupling entrainment upon radial widening of the annular cylinder (1d) simultaneous with the relative displacement.

2. A power-driven electric hand tool in accordance with Claim 1, characterised in that the coupling annular surfaces (1a, 6a), of the first and second coupling parts (4, 1), together effecting the rotary entrainment extend parallel to the output shaft (2), the pressure effect produced by the contact pressure exerted on the output shaft (2) and coming into action on the force deflection members (3) increasingly widening the coupling annular surface (1a).

3. A power-driven electric hand tool in accordance with Claim 1 or 2, characterised in that the inner coupling-annular-surface (6a) of the first coupling part (4) and the outer coupling-annular-surface (1a) of the second coupling part (1) overlap to a greater or lesser extent in accordance with the axial displaceability of the output shaft (2).

4. A power-driven electric hand tool in accordance with Claim 1, characterised in that the first coupling part (4) driven in rotation comprises a coupling toothed wheel (4a) with the coupling sleeve (6) secured thereto, the balls (3) which exert the contact action on the widenable annular cylinder (1d) of the second coupling part being mounted so as to be fixed relative to the driving shaft (2) and the annular cylinder (1d).

5. A power-driven electric hand tool in accordance with Claim 4, characterised in that the coupling toothed wheel (4a) with the coupling sleeve (6) is arranged so as to be axially-fixed relative to the gear head (10) of the electric hand tool and rotatable, and at a distance from the coupling toothed wheel (4a) the second coupling part (1) is arranged on the output shaft (2) by means of a boss (1b) so as to be fastened against relative rotation and axially-fixed, annular cylinder segments forming the annular cylinder (1d) issue from the boss (1b) and are radially widenable in the direction of the coupling sleeve (6) by axial slitting, at the level of the inner surface (1e) of the annular cylinder (1d), the balls (3) effecting the power deflection being located in an annular recess (4b) in the coupling toothed wheel (4a).

6. A power-driven electric hand tool in accordance with Claim 5, characterised in that the inner surface (1e) of the annular cylinder (1d), which inner surface (1e) is subjected to the action of the bails (3) on the coupling toothed wheel (4a), and/or the outer coupling countersurface (1a) of the annular cylinder (1d) and/or the inner coupling surface (6a) of the coupling sleeve (6) have a predetermined conicity (1 to 10°, preferably 3 to 7°).

7. A power-driven electric hand tool in accordance with Claim 5, characterised in that a vertically-adjustable depth stop (8) is arranged on the gear head (10) by means of a threaded bush (12) and surrounds the output shaft (2).

8. A power-driven electric hand tool in accordance with Claim 5, characterised in that the output shaft (2) is mounted via two radial bearings (7, 7') arranged in the housing of the gear head (10) and/or in the adjacent motor housing, and the coupling toothed wheel (4a) is mounted on the output shaft (2) via a further radial bearing (9) and is mounted with regard to the gear head housing (10) and/or the motor housing by means of an axial step bearing (5).

9. A power-driven electric hand tool in accordance with Claim 1, characterised in that an additional pressure spring axially pretensioning the output shaft (2) into its idling position in which it is advanced outwards is provided.

10. A power-driven electric hand tool in accordance with Claim 4, characterised in that the balls (3) acting upon the inner surface of the annular cylinder (1d) are located in separate receiving pockets in the coupling toothed wheel (4a) or fill up a receiving annular space in the coupling toothed wheel (4a)in a manner so as to be peripherally adjacent.

11. A power-driven electric hand tool in accordance with Claim 1, characterised in that the coupling sleeve (6) on the first coupling part (4) is received by the latter so as to be fastened against relative rotation yet have predetermined axial mobility.

12. A power-driven electric hand tool in accordance with Claim 11, characterised in that the coupling sleeve (6) on the coupling toothed wheel (4a) of the coupling part (4) driven by the motor is driven via a multi-splined toothing which ensures free axial mobility of the coupling sleeve (6) relative to the coupling toothed wheel (4a) on account of a predetermined gap in such a manner as to result in problem-free separation of the coupling annular surfaces (1a, 6a) - in a friction-locking and/or positive-locking operative connection upon rotary entrainment - from the clamping position occupied.

## Revendications

1. Outil à main à moteur électrique, en particulier perceuse, outil de manoeuvre des vis et écrous avec butée de profondeur et outils semblables, avec un embrayage à friction détachant à la fin de la phase de travail la liaison de commande entre le moteur électrique d'entraînement et l'arbre de sortie de l'outil, dans lequel l'arbre de sortie est logé translatable axialement et l'embrayage produit par friction la transmission du mouvement en raison d'une pression d'appui exercée sur l'arbre de sortie et, lors d'une réduction ou manque de pression d'entraînement, le mécanisme de commande cesse à nouveau, avec une première pièce d'embrayage entraînée par le moteur et une deuxième pièce d'embrayage solidaire en rotation et montée sans translation axiale sur l'arbre de sortie,
caractérisé en ce que
la pièce d'embrayage (1) montée solidaire en rotation sur l'arbre de sortie (2) est une griffe d'accouplement avec une partie cylindrique annulaire (1d) pouvant s'élargir contre sa propre rigidité flexible et comportant une surface annulaire d'embrayage (1a) extérieure qui s'enfonce dans un manchon d'embrayage (6) formé par la première pièce d'embrayage (4), et en ce que sont prévus des éléments de déviation de l'effort formés de billes (3) transformant la pression d'appui de l'arbre de sortie (2) en un élargissement radial de la surface annulaire d'embrayage (1a) à l'intérieur du manchon d'embrayage (6) de la première partie d'embrayage (4), éléments (3) qui sont retenus par la première pièce d'embrayage (4) de façon que se produise l'entraînement de l'embrayage à friction par suite de la translation relative occasionnée par l'aptitude au déplacement axial de l'arbre de sortie entre le manchon d'embrayage (6) d'une part et la pièce cylindrique annulaire solidaire de l'arbre de sortie (1d) d'autre part, lors de son élargissement radial simultané.

2. Outil à main à moteur électrique selon la revendication 1,
caractérisé en ce que
les surfaces annulaires d'embrayage (1a, 6a) de la première et de la deuxième pièce d'embrayage (4, 1) provoquant ensemble l'entraînement en rotation, se développent parallèlement à l'arbre de sortie (2), tandis que l'effet de pression créé par la pression d'appui exercée sur l'arbre de sortie (2) arrivant à influencer les éléments de déviation de l'effort (3) élargissent en l'ouvrant la face annulaire d'embrayage (1a) de manière amplifiée.

3. Outil à main à moteur électrique selon les revendications 1 ou 2,
caractérisé en ce que
la face annulaire interne d'embrayage (6a) de la première pièce d'embrayage (4) et la face annulaire externe d'embrayage (1a) de la deuxième pièce d'embrayage (1) correspondant à la possibilité de déplacement axial de l'arbre de sortie (2) ont une partie en recouvrement plus ou moins importante.

4. Outil à main à moteur électrique selon la revendication 1,
caractérisé en ce que
la première pièce d'embrayage (4) entraînée en rotation comporte une roue dentée d'embrayage (4a) avec le manchon d'embrayage (6) fixé à celle-ci, tandis que les billes (3) exerçant l'effet de compression sur la partie cylindrique annulaire (1d) apte à s'élargir de la deuxième pièce d'embrayage sont logées de manière stationnaire par rapport à l'arbre de commande (2) et à la partie cylindrique annulaire (1d).

5. Outil à main à moteur électrique selon la revendication 4,
caractérisé en ce que
la roue dentée d'embrayage (4a) avec le manchon d'embrayage (6) est montée mobile en rotation et non déplaçable axialement par rapport à la tête de mécanisme (10) de l'outil à main électrique et la deuxième pièce d'embrayage (1) est disposée à distance par rapport à la roue dentée d'embrayage (4a) solidaire en rotation sur l'arbre de sortie (2) et non déplaçable axialement au moyen d'un moyeu (1b) duquel partent des segments de cylindres annulaires formant la partie annulaire cylindrique (1d), tandis que sur la hauteur de la surface interne (1e) de la partie annulaire cylindrique (1d) les billes (3) occasionnant la déviation de la force sont situées dans un évidement annulaire (4b) de la roue dentée d'embrayage (4a).

6. Outil à main à moteur électrique selon la revendication 5,
la face (1e) interne soumise à l'action des billes (3) sur la roue dentée d'embrayage (4a), la partie annulaire cylindrique (1d) et/ou la contre-face extérieure d'embrayage (1a) de la partie cylindrique annulaire (1d) et/ou la face intérieure d'embrayage (6a) du manchon d'embrayage (6) comportent une conicité donnée (1 à 10°, de préférence 3 à 7°).

7. Outil à main à moteur électrique selon la revendication 5,
caractérisé en ce que
sur la tête de mécanisme (10) au moyen d'une douille taraudée (12) est placée une butée de profondeur (8) réglable en hauteur, qui entoure l'arbre de sortie (2).

8. Outil manuel à moteur électrique selon la revendication 5,
caractérisé en ce que
l'arbre de sortie (2) est monté sur deux roulements radiaux (7, 7') placés dans le boîtier de la tête du mécanisme (10) et/ou dans le boîtier contigu du moteur et la roue dentée d'embrayage (4a) est montée sur l'arbre de sortie (2) par l'intermédiaire d'un autre roulement radial (9) ainsi que par rapport au boîtier de la tête du mécanisme (10) et/ou par rapport au boîtier de moteur au moyen d'un roulement d'appui axial (5).

9. Outil à main à moteur électrique selon la revendication 1,
caractérisé en ce qu'
est prévu un ressort de pression supplémentaire qui précontraint axialement l'arbre de sortie (2) dans sa position de marche à vide poussée vers l'extérieur.

10. Outil à main à moteur électrique selon la revendication 4,
caractérisé en ce que
les billes (3) agissant sur la face interne de la partie annulaire cylindrique (1d) sont situées dans des poches d'évidement séparées sur la roue dentée d'embrayage (4a) ou remplissent de manière périphériquement contiguë un espace d'évidement annulaire sur la roue dentée d'embrayage (4a).

11. Outil à main à moteur électrique selon la revendication 1,
caractérisé en ce que
le manchon d'embrayage (6) reçoit la première pièce d'embrayage (4) de manière solidaire en rotation de celle-ci, toutefois avec une mobilité axiale prédéfinie.

12. Outil à main à moteur électrique selon la revendication 11,
caractérisé en ce que
le manchon d'embrayage (6) est commandé sur la roue dentée d'embrayage (4a) de la pièce d'embrayage (4) commandée par le moteur, par une denture conique multiple qui assure, par un écartement prédéfini, une mobilité axiale libre du manchon d'embrayage (6) par rapport à la roue dentée d'embrayage (4a), de manière qu'il se crée, hors de la position de serrage prise, une séparation parfaite des faces annulaires d'embrayage (1a, 6a) se trouvant ensemble lors de l'accompagnement en rotation par un assemblage par interpénétration par la force ou par la forme.
